# EUROPEAN PATENT SPECIFICATION

(11) **EP 4 194 616 B1**
(45) Date of publication and mention of the grant of the patent: **06.08.2025**
(21) Application number: 21897760.1
(22) Date of filing: 12.11.2021
(51) Int. Cl.: E02F 9/16, B62D 33/067, B62D 25/10, E02F 9/00

(54) **CAB SUPPORT STRUCTURE AND CONSTRUCTION MACHINE**
KABINENSTÜTZSTRUKTUR UND BAUMASCHINE
STRUCTURE DE SUPPORT DE CABINE ET MACHINE DE CONSTRUCTION

(30) Priority: 24.11.2020 JP 2020194622
(43) Date of publication of application: 14.06.2023
(73) Proprietor: Komatsu Ltd., Minato-ku Tokyo 107-8414 (JP)
(72) Inventor: YOKOTA Yuji, Tokyo 107-8414 (JP); OHKI Shinjirou, Tokyo 107-8414 (JP); KOBAYASHI Takaya, Tokyo 107-8414 (JP)
(74) Representative: Grünecker Patent- und Rechtsanwälte PartG mbB
(86) International application number: PCT/JP2021/041759
(87) International publication number: WO 2022/113786

(56) References cited:
- JP-A- 2005 119 362
- JP-A- 2010 234 832
- JP-A- 2012 144 074
- JP-A- 2012 144 074
- JP-A- 2012 144 210
- JP-U- H0 292 388

## Description

### TECHNICAL FIELD

The present invention relates to a cab support structure and a construction machine.

### BACKGROUND ART

Work vehicles such as dump trucks and hydraulic excavators are known as construction machines.

For example, Patent Document 1 below describes a dump truck that includes a vehicle body frame, a mount device mounted on the vehicle body frame, and a cab connected to the mount device to be rotatable (tilt-up, tilt-down) via a connecting pin. The vehicle body frame is provided with a stopper having an insertion hole through which the connecting pin is inserted. A gap is formed between the insertion hole of the stopper and the connecting pin to restrict the amount of displacement of the connecting pin in a radial direction beyond a predetermined amount. The connecting pin is provided movably in an axial direction of the connecting pin. A gap-filling member is integrally provided on the outer periphery of the connecting pin to be inserted into and pulled out of the gap as the connecting pin moves.

For example, Patent Document 2 below describes a hydraulic excavator that includes a swinging frame provided with a swing-type work device on the front side thereof, a floor plate having a driver's seat provided on the swinging frame to be tiltable with the front side thereof as a fulcrum, and a plurality of floor plate support mechanisms provided between a front side position of the swinging frame and a front side position of the floor plate for tiltably supporting the floor plate. The plurality of floor plate support mechanisms are constituted by a central floor plate support mechanism and left and right floor plate support mechanisms provided on the left and right sides of the central floor plate support mechanism. The central floor plate support mechanism is provided with a displacement restricting portion that allows the front position of the floor plate to move vertically with respect to the swinging frame when the floor plate is at a horizontal position and restricts the vertical displacement of the floor plate when the floor plate is at a tilt position. The left and right floor plate support mechanisms are provided with frame side bearings. Each frame side bearing is provided with an elastic member that elastically deforms between the frame side bearing and a connecting pin attached to a floor plate side bearing. The displacement restricting portion is constituted by upper and lower vertical cutout grooves provided in the frame side bearing to cut a pin hole in the vertical direction with a width smaller than the diameter of the pin hole and narrow shaft portions which are cut out at positions of the connecting pin facing the cutout grooves in parallel to the cutout grooves with a width dimension smaller than the width dimension of the cutout grooves. The central floor plate support mechanism is provided with a tilting stopper that restricts the tilting motion of the floor plate at a predetermined angular position when the floorboard is tilted. A further relevant prior art is known from JP 2012 144074.

### RELATED ART DOCUMENT

### PATENT DOCUMENT

[Patent Document 1]
   Japanese Unexamined Patent Application, First Publication No. 2012-144074
[Patent Document 2]
   Japanese Unexamined Patent Application, First Publication No. 2010-234832

### SUMMARY

### PROBLEMS TO BE SOLVED BY THE INVENTION

In the case of Patent Document 1, when the cab rotates in the tilt-up direction or the tilt-down direction, it is necessary to move the connecting pin together with the gap filling member and push the gap filling member into the insertion hole. On the other hand, when the connecting pin returns to its original position, it is necessary to pull the gap filling member out of the gap. Since it is necessary to push and pull out the gap-filling member, there is room for improvement in enhancing workability.

In the case of Patent Document 2, when the floor plate is disposed in a horizontal position, the narrow shaft portion of the connecting pin can be vertically displaced within each cutout groove of the frame side bearing. When the narrow shaft portion of the connecting pin enters the cutout groove, the rotation of the connecting pin is restricted. In a case where the connecting pin rotates from a state in which the narrow shaft portion of the connecting pin has entered the cutout groove, it is necessary to align the center of rotation of the connecting pin with the center of the pin hole, and thus there is room for improvement in enhancing workability.

Accordingly, an object of the present invention is to provide a cab support structure and a construction machine capable of enhancing workability.

### MEANS FOR SOLVING THE PROBLEM

According to an aspect of the present invention, there is provided a cab support structure including: a mount device provided on a vehicle body frame; and a connecting mechanism that connects a cab provided above the vehicle body frame via the mount device to the vehicle body frame to be rotatable between a seated position and a tilt position, wherein the connecting mechanism includes a connecting shaft that is connected to the mount device and extends in a horizontal direction, a displacement allowing member connected to the vehicle body frame, and an interlocking member that is connected to the cab and is rotatable in interlock with rotation of the cab, wherein the displacement allowing member has a displacement allowing hole that allows displacement of the connecting shaft in a vertical direction and allows rotation of the connecting shaft between the seated position and the tilt position, and wherein the interlocking member has a displacement allowing portion that allows displacement of the connecting shaft in the vertical direction at the seated position, and a displacement restricting portion that restricts downward displacement of the connecting shaft at the tilt position.

### ADVANTAGE OF THE INVENTION

According to the above aspect, it is possible to enhance workability.

### BRIEF DESCRIPTION OF THE DRAWINGS

FIG. 1 is a side view of a dump truck according to an embodiment.
FIG. 2 is a view showing a state when a cab according to the embodiment is rotated.
FIG. 3 is a perspective view showing a state when the cab according to the embodiment is at a seated position.
FIG. 4 is a perspective view showing a state in which a cover is removed from a cab support structure of FIG. 3.
FIG. 5 is a perspective view showing a state when the cab according to the embodiment is at a tilt position.
FIG. 6 is a view from arrow VI in FIG. 4.
FIG. 7 is a view from arrow VII in FIG. 5.
FIG. 8 is a view including an VIII-VIII cross section of FIG. 6.
FIG. 9 is a view including a IX-IX cross section in FIG. 7.
FIG. 10 is a view showing a state when an interlocking member in FIG. 7 is rotated from a tilt position to a lift-up position.

### DESCRIPTION OF THE EMBODIMENTS

Hereinafter, an embodiment of the present invention will be described with reference to the drawings. In the embodiment, a dump truck will be described as an example of a construction machine (a working vehicle).

### <Construction machine>

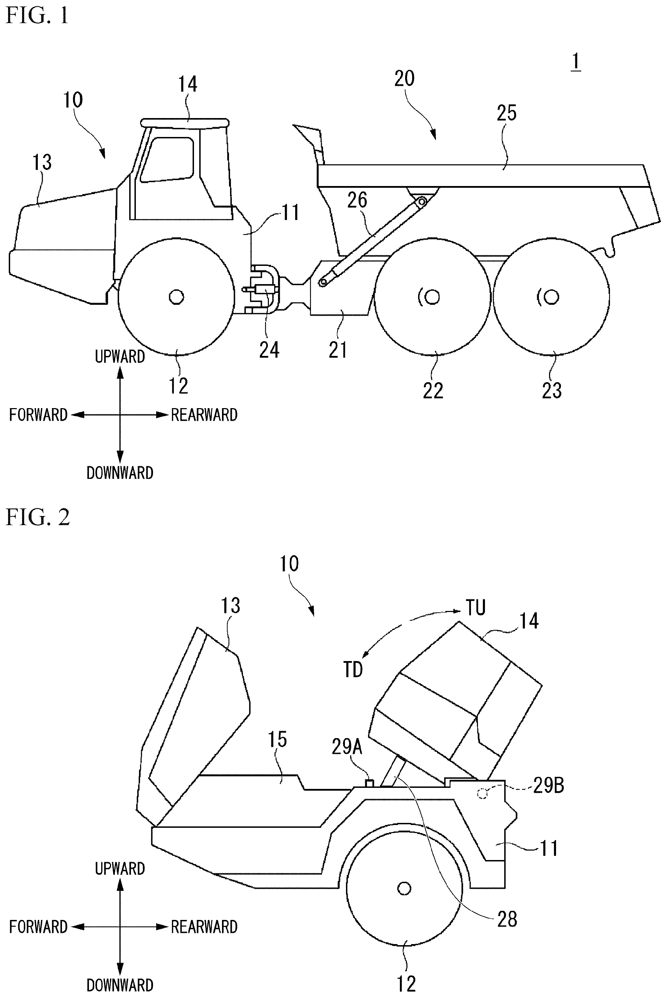

As shown in FIG. 1, a dump truck 1 is a construction machine and includes a vehicle front portion 10 and a vehicle rear portion 20. Hereinafter, a forward direction, a backward direction, and a vehicle width direction of the dump truck 1 are referred to as a "vehicle forward direction (one side in a vehicle front-rear direction)," a "vehicle rearward direction (the other side in the vehicle front-rear direction)," and a "vehicle width direction." The vehicle width direction may also be referred to as a "left side (one side in the vehicle width direction)" or a "right side (the other side in the vehicle width direction)." A right-hand side with respect to a direction in which the dump truck 1 moves forward is referred to as the right side, and a left-hand side with respect to a direction in which the dump truck 1 moves forward is referred to as the left side. A vertical direction, an upward direction, and a downward direction in a state where the dump truck 1 is disposed on a horizontal plane are simply referred to as a "vertical direction," an "upward direction," and a "downward direction."

The vehicle front portion 10 includes a front frame 11 (a vehicle body frame), front wheels 12, a hood 13, and a cab 14.

The front frame 11 constitutes a frame of the vehicle front portion 10. The hood 13 is attached to the front portion of the front frame 11 to be openable and closable. The cab 14 is provided above the front frame 11. The cab 14 is a roll over protective system (ROPS) cab with a safe structure to ensure the safety of an operator when the dump truck 1 overturns.

The vehicle rear portion 20 includes a rear frame 21, center wheels 22, and rear wheels 23. The rear frame 21 constitutes a frame of the vehicle rear portion 20. The vehicle rear portion 20 is provided behind the vehicle front portion 10. The rear frame 21 is connected to the front frame 11 to be bendable and swingable. A pair of left and right steering cylinders 24 bridge between the front frame 11 and the rear frame 21. By each steering cylinder 24 extending and contracting, the rear frame 21 can be bent with respect to the front frame 11, thereby enabling a steering operation.

The vehicle rear portion 20 includes a dump body 25 and lift cylinders 26. The dump body 25 is provided above the rear frame 21. The dump body 25 is loaded with a load such as earth. The lift cylinders 26 are provided between the left and right sides of the front portion of the dump body 25 and the rear frame 21. A lower rear portion of the dump body 25 is rotatably attached to the rear frame 21. The dump body 25 rotates as the lift cylinders 26 expand and contract.

A pair of front wheels 12 are provided on the front frame 11 to be spaced apart in a vehicle width direction. A pair of center wheels 22 are provided on the front portion of the rear frame 21 to be spaced apart in the vehicle width direction. A pair of rear wheels 23 are provided on the rear portion of the rear frame 21 to be spaced apart in the vehicle width direction. When the front wheels 12, the center wheels 22, and the rear wheels 23 are driven, the dump truck 1 moves forward or backward.

As shown in FIG. 2, the cab 14 is rotatable in a direction of arrow TU (a tilt-up direction) and a direction of arrow TD (a tilt-down direction) in a state where it is fixedly supported by the front frame 11 via a pair of rear side support structures 29B. Various devices 15 such as an engine, a torque converter, a transmission, and a hydraulic pump are provided in a space below the hood 13 and the cab 14.

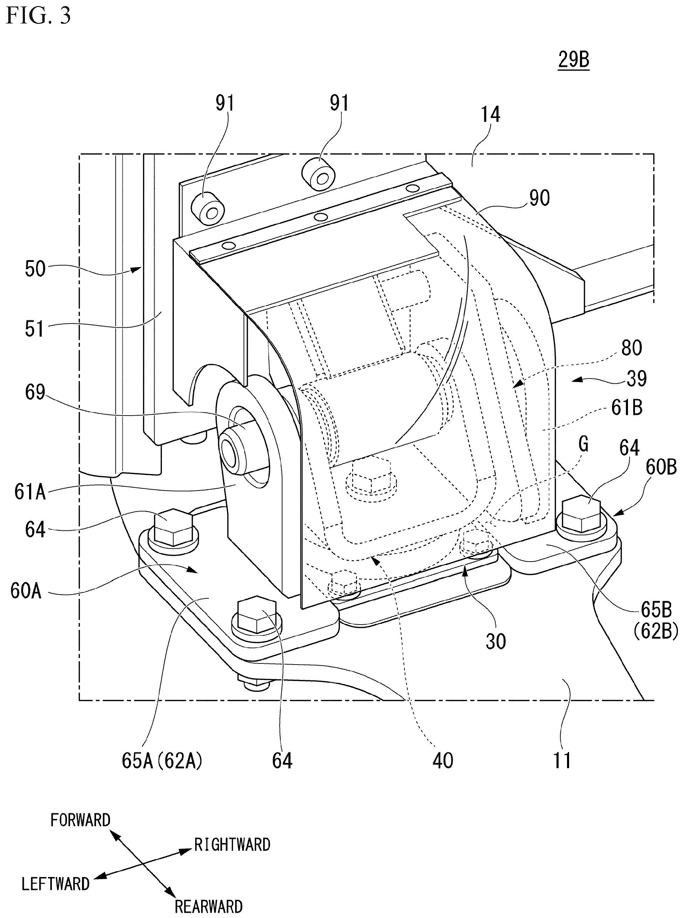

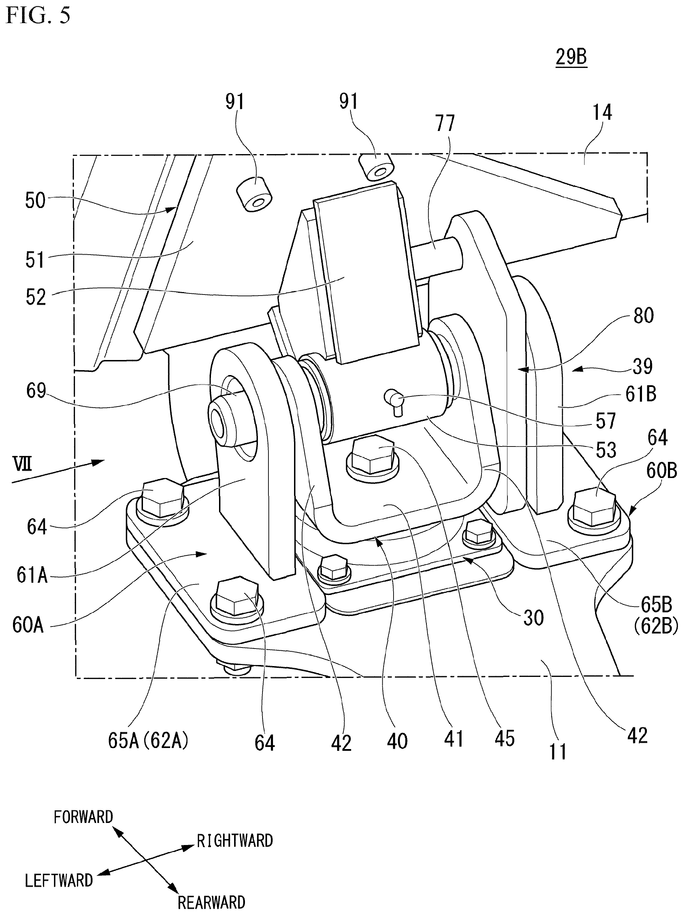

Front side support structures 29A and rear side support structures 29B are provided as cab support structures between the cab 14 and the front frame 11. A pair of front side support structures 29A are provided between the front portion of the cab 14 and the front frame 11 to be spaced apart in the vehicle width direction. The pair of rear side support structures 29B are provided between the rear portion of the cab 14 and the front frame 11 to be spaced apart in the vehicle width direction. Hereinafter, an initial position before the cab 14 rotates in the direction of arrow TU will be referred to as a "seated position" (see FIGS. 3, 4, 6, and 8). Hereinafter, a position where the cab 14 is rotated by a predetermined rotation angle in the direction of arrow TU from the seated position is referred to as a "tilt position" (see FIGS. 5, 7, and 9). At the seated position of the cab 14, both the left and right sides of the front portion and both the left and right sides of the rear portion of the cab 14 are supported by the cab support devices 29A and 29B.

For example, when inspecting or maintaining the various devices 15, the operator opens the hood 13 and further disassembles the front side support structure 29A. For example, by extracting a connecting shaft (not shown) from each front side support structure 29A, it is possible to release a support state of the cab 14 on both the left and right sides of the front portion of the cab 14 by mount devices. After releasing the support state, the operator rotates the cab 14 in the direction of arrow TU using operating power of a hydraulic cylinder, a crane, or the like. As a result, the upper sides of the various devices 15 are exposed. When a support rod 28 is inserted between the cab 14 and the front frame 11 in a state where the cab 14 is rotated, the cab 14 is held at a predetermined rotation angle.

### <Rear side support structure>

The rear side support structure 29B will be described below as the cab support structure. As the rear side support structure 29B, one of the pair of left and right rear side support structures 29B will be described. Since the other rear side support structure 29B has the same configuration as the one rear side support structure 29B, detailed description thereof will be omitted.

As shown in FIG. 3, the rear side support structure 29B includes a mount device 30, a connecting mechanism 39, and a cover 90.

### <Mount device>

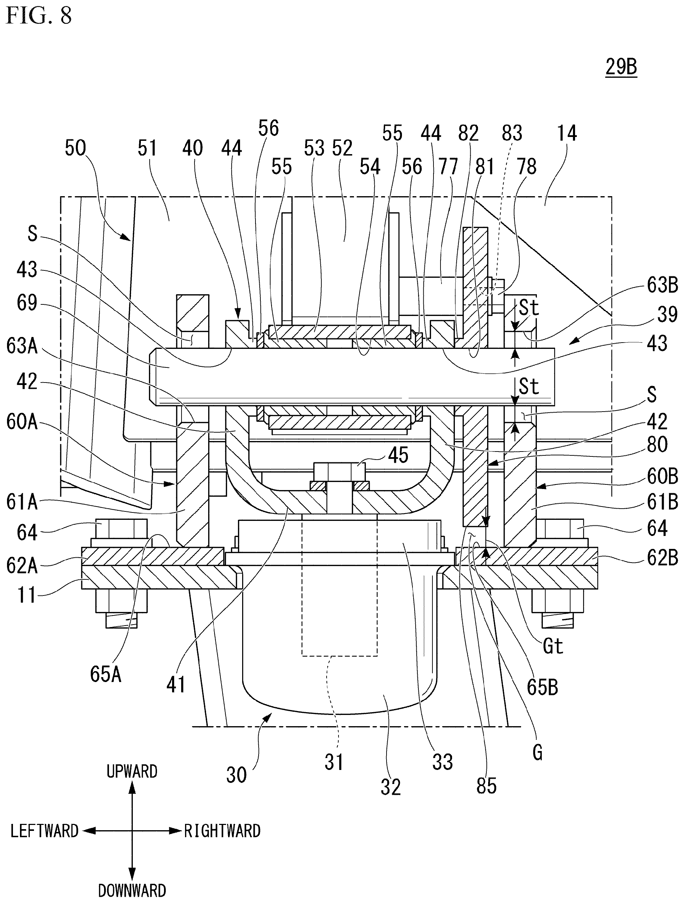

The mount device 30 is a device that supports the cab 14. The mount device 30 is provided on the front frame 11. The mount device 30 is fixed to the front frame 11 by a fastening member such as a bolt. The mount device 30 is filled with a viscous fluid (liquid) such as silicone oil. The mount device 30 is a liquid-filled type mount device 30. As shown in FIG. 8, the mount device 30 includes a movable shaft 31, a cup 32, and a cushion rubber 33.

The movable shaft 31 is formed in a circular column shape. The movable shaft 31 extends in the vertical direction. The cup 32 is closed in a liquid-tight state by the movable shaft 31 and the cushion rubber 33. The cushion rubber 33 is provided integrally with the outer periphery of the movable shaft 31. For example, in a case where vibration occurs in the cab 14, the vibration is transmitted to the mount device 30 via the connecting mechanism 39. The vibration transmitted to the mount device 30 displaces the movable shaft 31. The silicone oil is agitated due to the displacement of the movable shaft 31. The vibration of the cab 14 is damped by viscous resistance when the silicone oil is agitated.

### <Connecting mechanism>

The connecting mechanism 39 connects the cab 14 to the front frame 11 via the mount device 30 to be rotatable between the seated position and the tilt position. The connecting mechanism 39 includes a mount side bracket 40, a cab side bracket 50 (a connecting member), displacement allowing members 60A and 60B, a connecting shaft 69, and an interlocking member 80.

### <Mount side bracket>

The mount side bracket 40 is formed in a U shape with a bottom portion 41 and side portions 42.

The bottom portion 41 is fixed to the movable shaft 31 of the mount device 30 with a bolt 45. The side portions 42 are formed integrally with both the left and right ends of the bottom portion 41 to protrude upward therefrom. As shown in FIG. 8, mount side attachment holes 43 to which the connecting shaft 69 is attached are provided in portions of the pair of side portions 42 that face each other. A boss portion 44 protruding inward is provided on the outer periphery of each of the mount side attachment holes 43.

### <Cab side bracket>

The cab side bracket 50 includes a plate portion 51, a base portion 52, and an attachment portion 53.

The plate portion 51 is formed in a plate shape along the attachment surface of the cab 14. The plate portion 51 is fixed to the attachment surface of the cab 14 by, for example, welding or the like. The base portion 52 protrudes rearward from the plate portion 51. The base portion 52 is fixed to the plate portion 51 by, for example, welding or the like. The attachment portion 53 is formed in a cylindrical shape that opens in the vehicle width direction. The attachment portion 53 is fixed to the rear end of the base portion 52 by, for example, welding or the like.

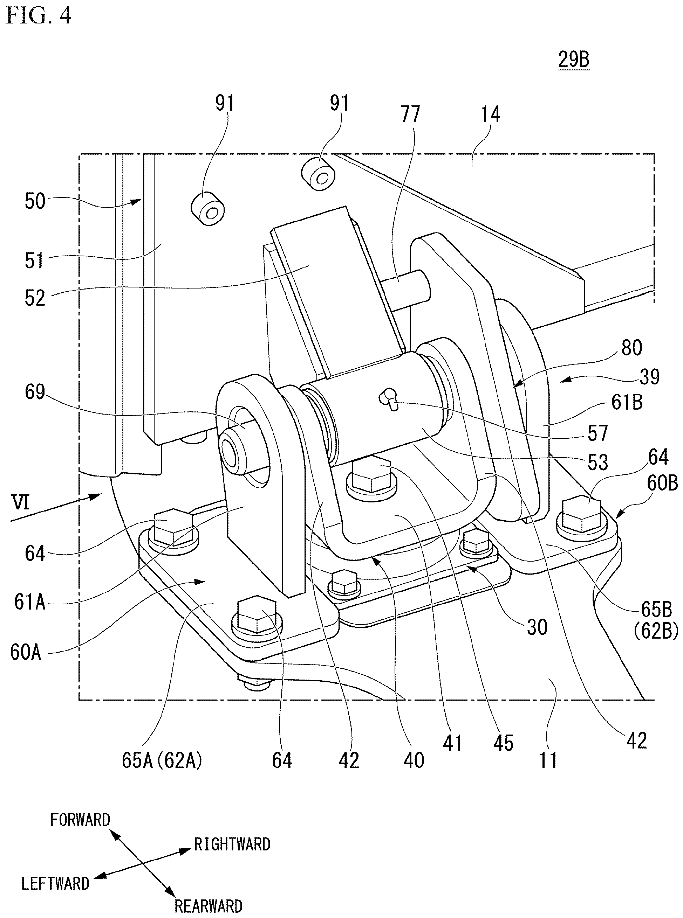

As shown in FIG. 8, the attachment portion 53 has a cab side attachment hole 54 (an insertion hole) through which the connecting shaft 69 is inserted. The connecting shaft 69 is attached to the cab side attachment hole 54 via a metal bushings 55 inserted from both the left and right sides of the cab side attachment hole 54. An annular shim 56 is provided between the bushing 55 and the boss portion 44. As shown in FIG. 4, the attachment portion 53 is provided with a grease supplying nipple 57 for supplying lubricating oil such as grease to the interior of the attachment portion 53.

As shown in FIG. 8, the mount side attachment hole 43 and the cab side attachment hole 54 are provided such that their centers are coaxial with each other. The inner diameter dimension of the mount side attachment hole 43 and the inner diameter dimension of the bushing 55 are substantially equal to the outer diameter dimension of the connecting shaft 69. The outer diameter dimension of the bushing 55 is substantially equal to the inner diameter dimension of the cab side attachment hole 54. The cab 14 is supported by the mount device 30 with almost no gap via the cab side bracket 50, the connecting shaft 69, and the mount side bracket 40.

### <Displacement allowing member>

A pair of displacement allowing members 60A and 60B are provided. The pair of displacement allowing members 60A and 60B are disposed with spacing in the vehicle width direction. The mount device 30 is disposed between the pair of displacement allowing members 60A and 60B in the vehicle width direction. The pair of displacement allowing members 60A and 60B are a first displacement allowing member 60A provided on a first end side of the connecting shaft 69 in an axial direction and a second displacement allowing member 60B provided on a second end side of the connecting shaft 69 in the axial direction, the connecting shaft 69 extending in the vehicle width direction (a horizontal direction).

The first displacement allowing member 60A includes a plate-shaped first vertical plate portion 61A extending in the vertical direction and a plate-shaped first horizontal plate portion 62A extending in a front-rear direction (the horizontal direction). In a cross-sectional view of FIG. 8, the first displacement allowing member 60A has an L-shaped cross-sectional shape.

The first vertical plate portion 61A has a first end side hole 63A (a displacement allowing hole) that opens in the axial direction of the connecting shaft 69. The first end side hole 63A allows the displacement of the connecting shaft 69 in the vertical direction. The first end side hole 63A allows the rotation of the connecting shaft 69 between the seated position and the tilt position. At the position shown in FIG. 8, the center of the first end side hole 63A is coaxial with the mount side attachment hole 43 and the cab side attachment hole 54. The inner diameter dimension of the first end side hole 63A is larger than the outer diameter dimension of the connecting shaft 69 by a predetermined value (2 × St).

The first horizontal plate portion 62A is fixed to the lower end of the first vertical plate portion 61A by, for example, welding or the like. The lower end of the first vertical plate portion 61A is fixed to the inner portion (a portion near the mount side bracket 40) of the first horizontal plate portion 62A in the vehicle width direction. The first horizontal plate portion 62A is fixed to the front frame 11 by a fastening member such as a bolt 64. The first horizontal plate portion 62A has an upper surface 65A which is parallel to the horizontal direction.

The second displacement allowing member 60B includes a plate-shaped second vertical plate portion 61B (a vertical plate portion) of a plate shape extending in the vertical direction and a plate-shaped second horizontal plate portion 62B (a horizontal plate portion) extending in a front-rear direction (the horizontal direction). In a cross-sectional view of FIG. 8, the second displacement allowing member 60B has an inverted L-shaped cross-sectional shape.

The second vertical plate portion 61B has a second end side hole 63B (a displacement allowing hole) that opens in the axial direction of the connecting shaft 69. The second end side hole 63B allows the displacement of the connecting shaft 69 in the vertical direction. The second end side hole 63B allows the rotation of the connecting shaft 69 between the seated position and the tilt position. At the position shown in FIG. 8, the center of the second end side hole 63B is coaxial with the mount side attachment hole 43 and the cab side attachment hole 54. The inner diameter dimension of the second end side hole 63B is larger than the outer diameter dimension of the connecting shaft 69 by a predetermined value (2 × St). For example, the first vertical plate portion 61A and the second vertical plate portion 61B may be formed in the same shape.

The second horizontal plate portion 62B is fixed to the lower end of the second vertical plate portion 61B by, for example, welding or the like.

The lower end of the second vertical plate portion 61B is fixed to the central portion of the second horizontal plate portion 62B in the vehicle width direction. The second horizontal plate portion 62B is fixed to the front frame 11 by a fastening member such as a bolt 64. The second horizontal plate portion 62B has an upper surface 65B which is parallel to the horizontal direction. For example, the first horizontal plate portion 62A and the second horizontal plate portion 62B may be formed the same shape.

Each of the displacement allowing members 60A and 60B is detachably connected to the front frame 11 via a fastening member such as a bolt 64. Each of the displacement allowing members 60A and 60B is formed of a material of a hardened metal. Each of the displacement allowing members 60A and 60B is formed of a material of a hardened steel plate, for example.

### <Connecting shaft>

The connecting shaft 69 is formed in a circular column shape extending in the vehicle width direction. The connecting shaft 69 is connected to the interlocking member 80 which will be described later. Both ends of the connecting shaft 69 protrude outward in the vehicle width direction with respect to the first vertical plate portion 61A and the second vertical plate portion 61B. A space S having a dimension in a radial direction of St is formed between the outer peripheral surface of the connecting shaft 69 and the inner peripheral surface of each of the end holes 63A and 63B. Due to the existence of this space S, the connecting shaft 69 can be displaced in the radial direction (the vertical direction in FIG. 8) by the dimension St. In other words, the connecting shaft 69 is restricted from being displaced by a predetermined amount of displacement of St or more by the displacement allowing members 60A and 60B.

### <Interlocking member>

The interlocking member 80 is connected to the connecting shaft 69. The interlocking member 80 is disposed between the mount side bracket 40 and the second displacement allowing member 60B. The interlocking member 80 is disposed with spacing from the second vertical plate portion 61B of the second displacement allowing member 60B in the vehicle width direction. The interlocking member 80 is formed in a plate shape extending parallel to the second vertical plate portion 61B.

The interlocking member 80 has a connecting hole 81 through which the connecting shaft 69 is inserted. A boss portion 82 protruding inward is provided on the outer periphery of the connecting hole 81. The center of the connecting hole 81 is coaxial with the mount side attachment hole 43 and the cab side attachment hole 54. The inner diameter dimension of the connecting hole 81 is substantially equal to the outer diameter dimension of the connecting shaft 69.

The interlocking member 80 is connected to the cab side bracket 50 via the connecting shaft 69, a cylindrical member 77, and a bolt 78. The interlocking member 80 is connected to the cab 14 via the cab side bracket 50. The interlocking member 80 is rotatable in interlock with the rotation of the cab 14. The interlocking member 80 is provided with a bolt insertion hole 83 that opens in the vehicle width direction. The cylindrical member 77 is formed in a cylindrical shape extending in the vehicle width direction from the surface of base portion 52 of cab side bracket 50 facing the upper portion of the interlocking member 80 toward the interlocking member 80. An end portion of the cylindrical member 77 on a side of the base portion 52 is fixed to the base portion 52 by welding or the like. A portion of the cylindrical member 77 on a side of the interlocking member 80 is fixed to the upper portion of the interlocking member 80 by the bolt 78 through the bolt insertion hole 83.

The interlocking member 80 is detachably connected to the cab 14 via the bolt 78 or the like. The interlocking member 80 is formed of a material of a hardened metal. The interlocking member 80 is formed of a material of a hardened steel plate, for example. For example, the interlocking member 80 may be formed of the same member as the displacement allowing members 60A and 60B.

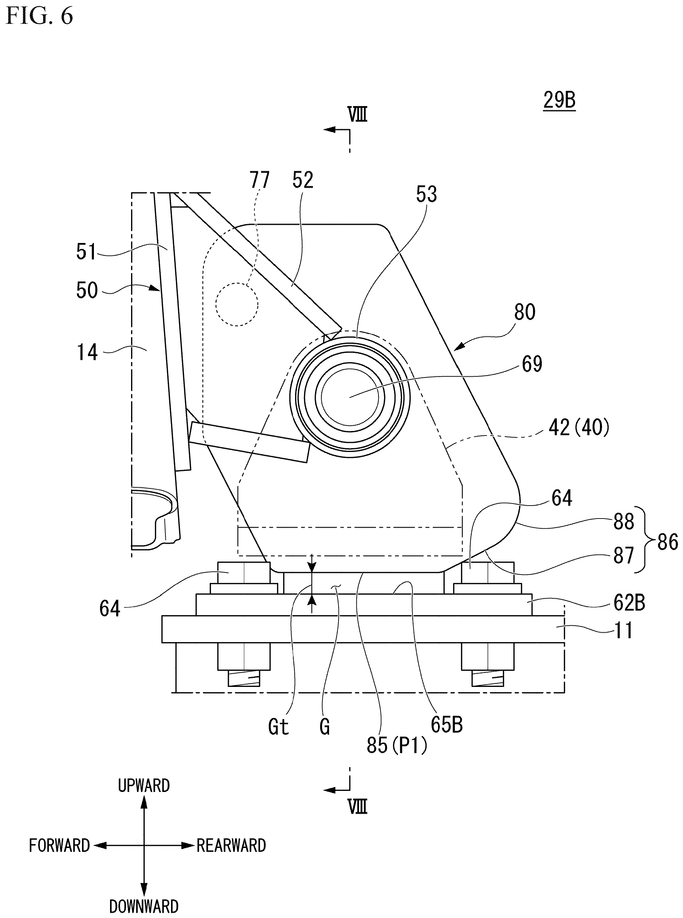

As shown in FIG. 6, the interlocking member 80 includes a displacement allowing portion 85 that allows the displacement of the connecting shaft 69 and a displacement restricting portion 86 that restricts the displacement of the connecting shaft 69. The displacement allowing portion 85 and the displacement restricting portion 86 are continuous along the outer periphery of the interlocking member 80.

FIG. 6 is a view showing a state when the cab 14 is at the seated position in the axial direction of the connecting shaft 69.

The displacement allowing portion 85 allows the displacement of the connecting shaft 69 in the vertical direction at the seated position. At the seated position, a gap G is provided between the displacement allowing portion 85 and the upper surface 65B of the second horizontal plate portion 62B to allow the displacement of the connecting shaft 69 in the vertical direction. As shown in FIG. 8, at the seated position, the vertical dimension Gt of the gap G is larger than the vertical dimension St of the space S (the spacing between the inner surface of the displacement allowing hole and the connecting shaft 69). As shown in FIG. 6, the displacement allowing portion 85 has a first flat surface P1 parallel to the horizontal direction at the seated position. At the seated position, the first flat surface P1 is parallel to the upper surface 65B of the second horizontal plate portion 62B.

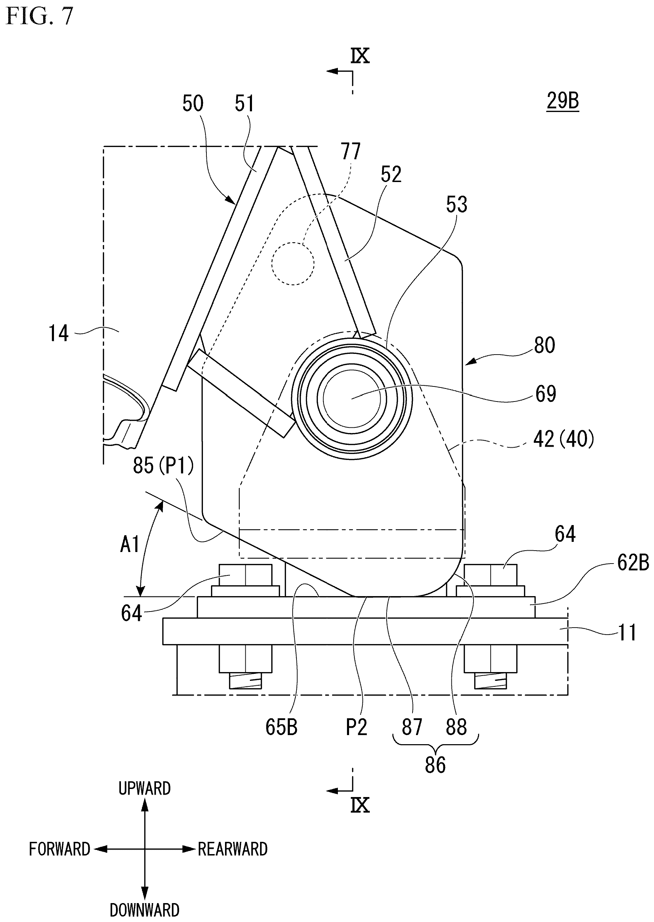

FIG. 7 is a view showing a state when the cab 14 is at the tilt position in the axial direction of the connecting shaft 69.

The displacement restricting portion 86 restricts the downward displacement of the connecting shaft 69 at the tilt position. At the tilt position, the displacement restricting portion 86 is in contact with the upper surface 65B of the second horizontal plate portion 62B. The displacement restricting portion 86 has a second flat surface P2 (a flat surface) along the upper surface 65B of the second horizontal plate portion 62B at the tilt position.

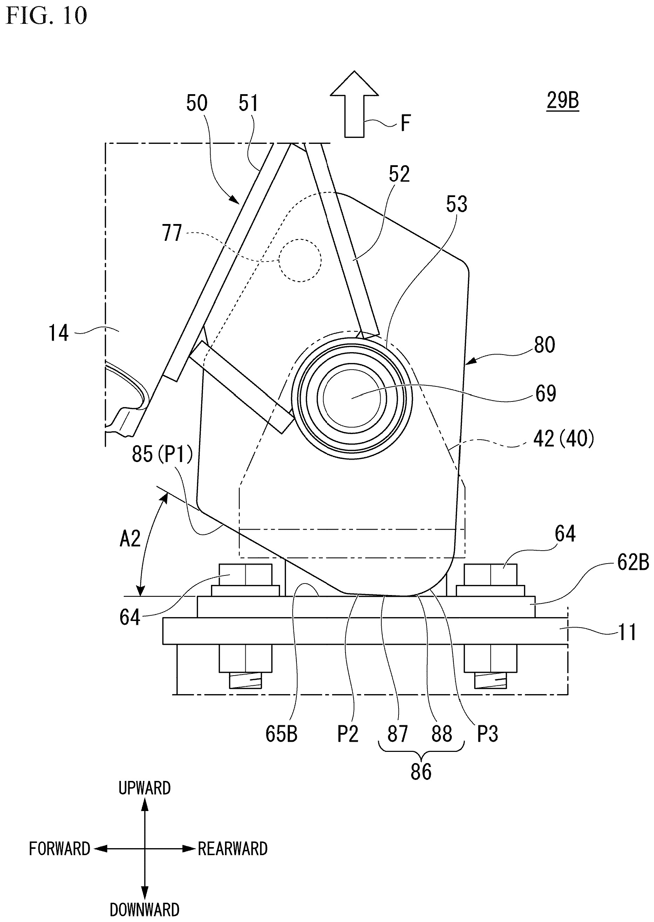

FIG. 10 is a view showing a state when the interlocking member 80 in FIG. 7 is rotated from the tilt position to a lift-up position.

The cab 14 is rotatable to the lift-up position inclined more than the tilt position. The displacement restricting portion 86 includes a first restricting portion 87 that is in contact with the upper surface 65B of the second horizontal plate portion 62B at the tilt position and a second restricting portion 88 that is in contact with the upper surface 65B of the second horizontal plate portion 62B at the lift-up position.

As shown in FIG. 7, the first restricting portion 87 has the second flat surface P2 (a flat surface) along the upper surface 65B of the second horizontal plate portion 62B at the tilt position.

As shown in FIG. 10, the second restricting portion 88 has an arc-shaped curved surface P3 that curves outward in the radial direction of the connecting shaft 69 when viewed in the axial direction along the connecting shaft 69. The first flat surface P1, the second flat surface P2, and the curved surface P3 are disposed in order in the rotation direction of the interlocking member 80.

### <Cover>

As shown in FIG. 3, the cover 90 is provided on the connecting mechanism 39. The cover 90 is formed of an elastic material such as rubber. The cover 90 covers the gap G. The cover 90 is detachably attached to the plate portion 51 of the cab side bracket 50 with an attachment pin 91 or the like.

The cover 90 extends downward from the plate portion 51 and covers the connecting mechanism 39 from above. The lower end of the cover 90 is in contact with the upper surfaces 65A and 65B of the horizontal plate portions 62A and 62B. The cover 90 extends across the first vertical plate portion 61A of the first displacement allowing member 60A and the second vertical plate portion 61B of the second displacement allowing member 60B in the vehicle width direction.

### <Rotating operation of cab>

Next, the operation when the cab 14 is rotated in a tilt-up direction from a tilt-down state (the state at the seated position) will be described.

At the seated position, the cab 14 is supported by four cab support structures located on both the left and right sides of the front portion of the cab 14 and on both the left and right sides of the rear portion of the cab 14. As shown in FIG. 6, at the seated position, the gap G is provided between the displacement allowing portion 85 of the interlocking member 80 and the upper surface 65B of the second horizontal plate portion 62B of the second displacement allowing member 60B to allow the displacement of the connecting shaft 69 in the vertical direction. As shown in FIG. 8, at the seated position, the vertical dimension Gt of the gap G is larger than the vertical dimension St of the spacing S between the inner surface of the displacement allowing hole and the connecting shaft 69. At the seated position, the weight of the cab 14 is transferred to the mount devices in the four cab support structures on both left and right sides of the front portion of the cab 14 and on both left and right sides of the rear portion of the cab 14 (the left and right front side support structures 29A and the left and right rear side support structures 29B).

For example, as shown in FIG. 2, when the cab 14 is rotated in the tilt-up direction from the seated position, if a connecting shaft (not shown) is extracted from each front side support structure 29A, the support state by the mount devices in both the left and right sides of the front portion of the cab 14 is released. After releasing the support state, the operator rotates the cab 14 in the direction of arrow TU using operating power of a hydraulic cylinder, a crane, or the like.

When the cab 14 rotates in the arrow TU direction, the interlocking member 80 rotates in interlock with the rotation of the cab 14. As the interlocking member 80 rotates, the displacement restricting portion 86 of the interlocking member 80 approaches the upper surface 65B of the second horizontal plate portion 62B. As shown in FIG. 7, at the tilt position, the displacement restricting portion 86 (the first restricting portion 87) of the interlocking member 80 is in contact with the upper surface 65B of the second horizontal plate portion 62B. At the tilt position, the first restricting portion 87 of the interlocking member 80 is in contact with the upper surface 65B of the second horizontal plate portion 62B between the flat surfaces.

Hereinafter, the angle formed by the upper surface 65B (the horizontal plane) of the second horizontal plate portion 62B and the straight line along the displacement allowing portion 85 of the interlocking member 80 when viewed in the axial direction of the connecting shaft 69 is referred to as a rotation angle. For example, at the tilt position, when the support rod 28 (see FIG. 2) is inserted between the cab 14 and the front frame 11, the cab 14 is held at a predetermined rotation angle A1. For example, at the tilt position, the rotation angle A1 is about 27 degrees.

As shown in FIG. 10, in order to insert the support rod 28 (see FIG. 2) between the cab 14 and the front frame 11, the cab 14 is once rotated to the lift-up position inclined more than the tilt position. At the lift-up position, the second restricting portion 88 of the interlocking member 80 is in contact with the upper surface 65B of the second horizontal plate portion 62B. In the example of FIG. 10, a portion of the second restricting portion 88 of the interlocking member 80 near the first restricting portion 87 is in contact with the upper surface 65B of the second horizontal plate portion 62B. For example, at the lift-up position, a rotation angle A2 is about 29 degrees.

After the support rod 28 (see FIG. 2) is inserted between the cab 14 and the front frame 11 at the lift-up position, the cab 14 is rotated (returned) from the lift-up position to the tilt position. At the tilt position, the weight of the cab 14 is transferred to the front frame 11 through the interlocking members 80 and the second horizontal plate portions 62B of the two cab support structures (the left and right rear side support structures 29B) located on both the left and right sides of the rear portion of the cab 14.

The displacement allowing holes 63A and 63B (see FIG. 8) allow the connecting shaft 69 to rotate not only between the seated position and the tilt position, but also between the tilt position and the lift-up position. That is, the displacement allowing holes 63A and 63B always allow the connecting shaft 69 to rotate between the seated position and the lift-up position.

### <Operational effect>

As described above, the rear side support structure 29B of the present embodiment includes the mount device 30 provided on the front frame 11 and the connecting mechanism 39 that connects the cab 14 provided above the front frame 11 via the mount device 30 to the front frame 11 to be rotatable between the seated position and the tilt position, the connecting mechanism 39 includes the connecting shaft 69 that is connected to the mount device 30 and extends in the horizontal direction, the displacement allowing members 60A and 60B connected to the front frame 11, and the interlocking member 80 that is connected to the cab 14 and is rotatable in interlock with rotation of the cab 14, the displacement allowing members 60A and 60B have the displacement allowing holes 63A and 63B that allow displacement of the connecting shaft 69 in the vertical direction and allow rotation of the connecting shaft 69 between the seated position and the tilt position, and the interlocking member 80 has the displacement allowing portion 85 that allows displacement of the connecting shaft 69 in the vertical direction at the seated position and the displacement restricting portion 86 that restricts downward displacement of the connecting shaft 69 at the tilt position.

In the present embodiment, the displacement of the connecting shaft 69 in the vertical direction is allowed by the displacement allowing portion 85 of the interlocking member 80 at the seated position. On the other hand, the downward displacement of the connecting shaft 69 is restricted by the displacement restricting portion 86 of the interlocking member 80 at the tilt position. Therefore, it is not necessary to push or pull the gap filling member into or out of the displacement allowing holes 63A and 63B of the displacement allowing members 60A and 60B. Furthermore, in the present embodiment, the displacement allowing holes 63A and 63B allow the connecting shaft 69 to rotate between the seated position and the tilt position, and thus it is not necessary to align the rotation center of the connecting shaft 69 and the center of the displacement allowing holes 63A and 63B. Therefore, workability can be improved.

In the present embodiment, the displacement allowing member 60 includes the plate-shaped vertical plate portion 61B that has the displacement allowing hole 63B and extends in the vertical direction, and the plate-shaped horizontal plate portion 62B that is coupled to a lower portion of the vertical plate portion 61B, is connected to the front frame 11, and extends in the horizontal direction, the interlocking member 80 is formed in a plate shape extending parallel to the vertical plate portion 61B, the displacement allowing portion 85 and the displacement restricting portion 86 are continuous along an outer periphery of the interlocking member 80, at the seated position, the gap G is provided between the displacement allowing portion 85 and the upper surface 65B of the horizontal plate portion 62B to allow the displacement of the connecting shaft 69 in the vertical direction, and at the tilt position, the displacement restricting portion 86 is in contact with the upper surface 65B of the horizontal plate portion 62B.

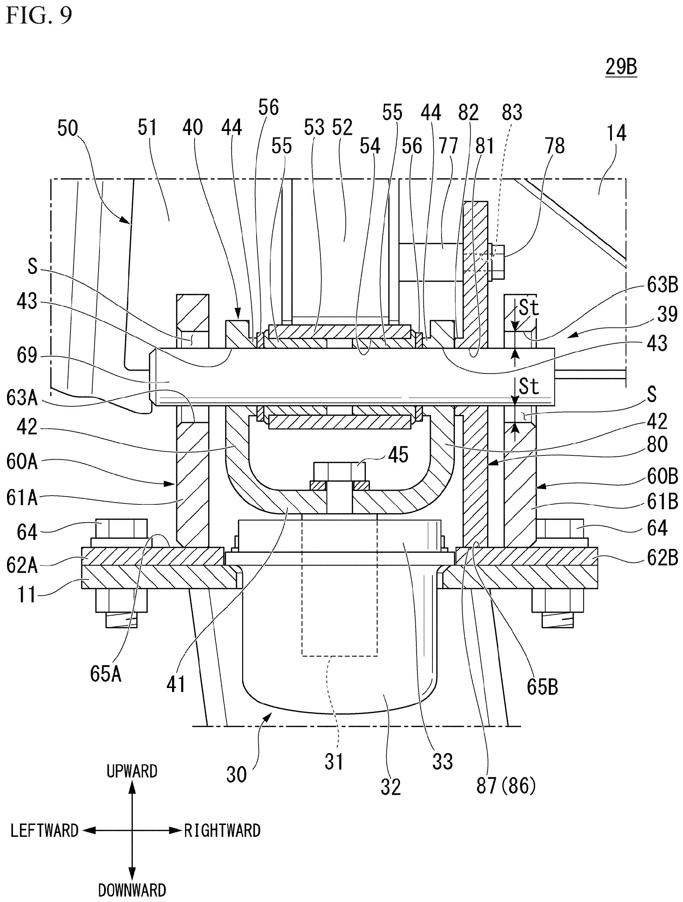

As shown in FIG. 6, in the present embodiment, the displacement allowing portion 85 and the displacement restricting portion 86 are continuous along the outer periphery of the interlocking member 80. As shown in FIG. 8, at the seated position, the displacement of the connecting shaft 69 in the vertical direction is allowed by the gap G between the displacement allowing portion 85 of the interlocking member 80 and the upper surface 65B of the horizontal plate portion 62B. As shown in FIG. 9, at the tilt position, the displacement restricting portion 86 of the interlocking member 80 is in contact with the upper surface 65B of the horizontal plate portion 62B, and thus the downward displacement of the connecting shaft 69 is restricted. Therefore, it is possible to smoothly switch between the displacement allowing state and the displacement restricting state of the connecting shaft 69 by rotating the interlocking member 80.

In the present embodiment, at the seated position, the vertical dimension Gt of the gap G is larger than the vertical dimension St of the spacing S between the inner surface of the displacement allowing hole and the connecting shaft 69 (Gt > St).

Therefore, even in a case where an excessive load is applied to the connecting shaft 69, the connecting shaft 69 comes into contact with the inner surface of the displacement allowing hole. Therefore, the interlocking member 80 does not come into contact with the upper surface 65B of the second horizontal plate portion 62B.

Incidentally, in a case where the displacement restricting portion 86 has a curved surface that curves toward the upper surface 65B of the horizontal plate portion 62B at the tilt position, the displacement restricting portion 86 is brought into point contact with the upper surface 65B of the horizontal plate portion 62B, and thus the pressure in the contact portion may become excessive.

On the other hand, in the present embodiment, as shown in FIG. 7, the displacement restricting portion 86 has the flat surface P2 along the upper surface 65B of the horizontal plate portion 62B at the tilt position. Therefore, at the tilt position, the displacement restricting portion 86 and the upper surface 65B of the horizontal plate portion 62B are in contact with each other between the flat surfaces. Therefore, it is possible to prevent the pressure at the contact portion from becoming excessive.

In the present embodiment, the cab 14 is rotatable to a lift-up position inclined more than the tilt position, the displacement restricting portion 86 has the first restricting portion 87 that is in contact with the upper surface 65B of the horizontal plate portion 62B at the tilt position, and the second restricting portion 88 that is in contact with the upper surface 65B of the horizontal plate portion 62B at the lift-up position, and the second restricting portion 88 has the arc-shaped curved surface P3 that curves outward in the radial direction of the connecting shaft 69 when viewed in an axial direction along the connecting shaft 69.

Therefore, it is possible to smoothly switch from the tilt position to the lift-up position by rotating the interlocking member 80.

Incidentally, in a case where the second restricting portion 88 has a square shape projecting outward in the radial direction of the connecting shaft 69 when viewed in the axial direction, the connecting shaft 69 may be excessively displaced in the direction of arrow F (upward) shown in FIG. 10, and an excessive upward load may be applied to the mount device 30.

On the other hand, in the present embodiment, the second restricting portion 88 has the arc-shaped curved surface P3 that curves outward in the radial direction of the connecting shaft 69 when viewed in the axial direction, and thus it is possible to prevent the connecting shaft 69 from being excessively displaced upward. Therefore, it is possible to prevent an excessive upward load from being applied to the mount device 30.

In the present embodiment, the rear side support structure 29B further includes the cover 90 that is provided on the connecting mechanism 39 and covers the gap G.

Therefore, it is possible to prevent foreign matter such as gravel from entering the gap G.

In the present embodiment, the cover 90 is formed of an elastic material.

Therefore, the cover 90 can be deformed to follow the rotation of the interlocking member 80 between the seated position and the tilt position. As a result, it is not necessary to attach and detach the cover 90 to and from the connecting mechanism 39, and thus it is possible to enhance the workability.

In the present embodiment, each of the displacement allowing members 60A and 60B and the interlocking member 80 is formed of a material of a hardened metal.

Therefore, it is possible to increase the strength of each of the displacement allowing members 60A and 60B and the interlocking member 80 and to curb wear thereof compared to the case where at least one of the displacement allowing members 60A and 60B and the interlocking member 80 is formed of a simple metal (a material of not hardened metal).

In the present embodiment, a pair of displacement allowing members 60A and 60B are provided, and the pair of displacement allowing members 60A and 60B are a first displacement allowing member 60A provided on a first end side of the connecting shaft 69 in an axial direction and a second displacement allowing member 60B provided on a second end side of the connecting shaft 69 in the axial direction.

Therefore, even in a case where an excessive load is applied to the connecting shaft 69, the connecting shaft 69 comes into contact with the inner surfaces of the displacement allowing holes 63A and 63B in the first displacement allowing member 60A and the second displacement allowing member 60B. Therefore, the interlocking member 80 does not come into contact with the upper surface 65B of the second horizontal plate portion 62B.

Incidentally, when the displacement allowing member is connected to the front frame 11, it is necessary to the work of lifting the displacement allowing member above the front frame 11. If the displacement allowing member is a single member, the weight of the displacement allowing member is heavy, which may make the work of lifting the displacement allowing member difficult.

On the other hand, in the present embodiment, a pair of displacement allowing members 60A and 60B are provided, and thus the displacement allowing members 60A and 60B can share the weight. Therefore, it is possible to facilitate the work of lifting the displacement allowing members 60A and 60B.

In the present embodiment, the rear side support structure 29B further includes the cab side bracket 50 connected to the cab 14. The cab side bracket 50 has the cab side attachment hole 54 through which the connecting shaft 69 is inserted, and the interlocking member 80 is connected to the cab 14 via the cab side bracket 50.

Since the interlocking member 80 is connected to the cab 14 via the connecting shaft 69 and the cab side bracket 50, it is possible to more firmly connect the interlocking member 80 to the cab 14. Therefore, the interlocking member 80 can be rotated more smoothly in interlock with the rotation of the cab 14.

### <Other embodiments>

In the above-described present embodiment, an example in which the displacement allowing portion 85 and the displacement restricting portion 86 are continuous along the outer periphery of the interlocking member 80 has been described, but the present invention is not limited to this. For example, the displacement allowing portion 85 and the displacement restricting portion 86 may not be continuous along the outer periphery of the interlocking member 80. For example, at least one of the displacement allowing portion 85 and the displacement restricting portion 86 may be provided at a location different from the outer circumference of the interlocking member 80. For example, the aspects of the displacement allowing portion 85 and the displacement restricting portion 86 can be changed according to the required specifications.

In the above-described embodiment, an example in which the gap G is provided between the displacement allowing portion 85 of the interlocking member 80 and the upper surface 65B of the horizontal plate portion 62B to allow the displacement of the connecting shaft 69 in the vertical direction at the seated position and the displacement restricting portion 86 of the interlocking member 80 is in contact with the upper surface 65B of the horizontal plate portion 62B at the tilt position has been described, but the present invention is not limited to this. For example, the gap G may be provided between the displacement allowing portion 85 of the interlocking member 80 and the upper surface of the front frame 11 to allow the displacement of the connecting shaft 69 in the vertical direction at the seated position, and the displacement restricting portion 86 of the interlocking member 80 may be in contact with the upper surface of the front frame 11 at the tilt position. For example, the displacement allowing members 60A and 60B may not have the horizontal plate portions 62A and 62B. For example, the aspects of the displacement allowing members 60A and 60B can be changed according to the required specifications.

In the above-described embodiment, an example in which the vertical dimension Gt of the gap G is larger than the vertical dimension St of the spacing S between the inner surface of the displacement allowing hole and the connecting shaft 69 (Gt > St) at the seated position has been described, but the present invention is not limited to this. For example, at the seated position, the vertical dimension Gt of the gap G may be equal to or smaller than the vertical dimension St of the spacing S between the inner surface of the displacement allowing hole and the connecting shaft 69 (Gt ≤ St).

In the above-described embodiment, an example in which the displacement restricting portion 86 has the flat surface P2 along the upper surface 65B of the horizontal plate portion 62B at the tilt position has been described, but the present invention is not limited to this. For example, the displacement restricting portion 86 may have a curved surface that curves toward the upper surface 65B of the horizontal plate portion 62B or a protrusion that protrudes toward the upper surface 65B of the horizontal plate portion 62B at the tilt position. For example, the shape of the displacement restricting portion 86 can be changed according to the required specifications.

In the above-described embodiment, an example in which the cab 14 is rotatable to a lift-up position inclined more than the tilt position, the displacement restricting portion 86 has the first restricting portion 87 that is in contact with the upper surface 65B of the horizontal plate portion 62B at the tilt position, and the second restricting portion 88 that is in contact with the upper surface 65B of the horizontal plate portion 62B at the lift-up position, and the second restricting portion 88 has the arc-shaped curved surface P3 that curves outward in the radial direction of the connecting shaft 69 when viewed in an axial direction along the connecting shaft 69 has been described, but the present invention is not limited to this. For example, the second restricting portion 88 may have an angular shape protruding outward in the radial direction of the connecting shaft 69 when viewed in the axial direction. For example, the shape of the second restricting portion 88 can be changed according to the required specifications.

In the above-described embodiment, an example in which the rear side support structure 29B further includes the cover 90 that is provided on the connecting mechanism 39 and covers the gap G has been described, but the present invention is not limited to this. For example, the rear side support structure 29B may not include the cover 90. For example, the gap G may be exposed at all times.

In the above-described embodiment, an example in which the cover 90 is formed of an elastic material has been described, but the present invention is not limited to this. For example, the cover 90 may be formed of a material other than the elastic material. For example, the material forming the cover 90 can be changed according to the required specifications.

In the above-described embodiment, an example in which each of the displacement allowing members 60A and 60B and the interlocking member 80 is formed of a material of a hardened metal has been described, but the present invention is not limited to this. For example, at least one of the displacement allowing members 60A and 60B and the interlocking member 80 may be formed of a material of a hardened metal.

For example, in a case where the displacement allowing member 60B is detachably connected to the front frame 11 and the interlocking member 80 is detachably connected to the cab 14, only the interlocking member 80 of the displacement allowing member 60B and the interlocking member 80 may be formed of a material of a hardened metal. In this case, it is possible to increase the strength of the interlocking member 80 and to curb the wear thereof. For example, in a case where replacement of the displacement allowing member 60B is easier than replacement of the interlocking member 80, it is possible to facilitate the work of replacing the displacement allowing member 60B with a new displacement allowing member when the displacement allowing member 60B is worn while the frequency of replacement of the interlocking member 80 is reduced.

In the above-described embodiment, an example in which a pair of displacement allowing members 60A and 60B are provided, and the pair of displacement allowing members 60A and 60B are the first displacement allowing member 60A provided on a first end side of the connecting shaft 69 in an axial direction and the second displacement allowing member 60B provided on a second end side of the connecting shaft 69 in the axial direction has been described, but the present invention is not limited to this. For example, the displacement allowing member may be a single member. For example, the aspect of the displacement allowing member can be changed according to the required specifications.

In the present embodiment, an example in which the rear side support structure 29B further includes the cab side bracket 50 connected to the cab 14 and the cab side bracket 50 has the cab side attachment hole 54 through which the connecting shaft 69 is inserted, and the interlocking member 80 is connected to the cab 14 via the cab side bracket 50 has been described, but the present invention is not limited to this. For example, the rear side support structure 29B may not include the cab side bracket 50. For example, the interlocking member 80 may be connected to the cab 14 via the connecting shaft 69 without the cab side bracket 50. For example, the connection aspect of the interlocking member 80 can be changed according to the required specifications.

In the above-described embodiment, the articulated dump truck 1 in which the vehicle body frame is constituted by the front frame and the rear frame has been described as an example of the construction machine (the work vehicle), but the present invention is not limited to this. For example, the present invention may be applied to other work vehicles such as a rigid frame dump truck having a single vehicle body frame, a hydraulic excavator, and a bulldozer.

In the above-described embodiments, a liquid-sealed type mount device has been described as an example of the mount device, but the present invention is not limited to this. For example, the mount device may be another type of mount device using rubber, springs, or the like. For example, the aspect of the mount device can be changed according to the required specifications.

### BRIEF DESCRIPTION OF THE REFERENCE SYMBOLS

1 Dump truck (construction machine)
11 Front frame (vehicle body frame)
14 Cab
29A Front side cab support structure (cab support structure)
29B Rear side support structure (cab support structure)
30 Mount device
39 Connecting mechanism
50 Cab side bracket (connecting member)
54 Cab side attachment hole (insertion hole)
60A First displacement allowing member (displacement allowing member)
60B Second displacement allowing member (displacement allowing member)
61B Second vertical plate portion (vertical plate portion)
62B Second horizontal plate portion (horizontal plate portion)
63B Second end side hole (displacement allowing hole)
65B Upper surface
69 Connecting shaft
80 Interlocking member
85 Displacement allowing portion
86 Displacement restricting portion
87 First Restricting portion
88 Second Restricting portion
90 Cover
G Gap
Gt Vertical dimension of gap
P2 Second flat surface (flat surface)
P3 Curved surface
S Space (spacing)
St Vertical dimension of space (spacing)

## Claims

1. A cab support structure (29B) of a construction machine (1) comprising:
a mount device (30) to be provided on a vehicle body frame (11); and
a connecting mechanism (39) that is configured to connect a cab (14) provided above the vehicle body frame (11) via the mount device (30) to the vehicle body frame (11) to be rotatable between a seated position and a tilt position,
wherein the connecting mechanism (39) includes
a connecting shaft (69) that is connected to the mount device (30) and extends in a horizontal direction in a state where the construction machine (1) is disposed on a horizontal plane,
a displacement allowing member (60A, 60B) configured to be connected to the vehicle body frame (11), and
an interlocking member (80) that is configured to be connected to the cab (14) and is rotatable in interlock with rotation of the cab (14),
**characterised in that**, the displacement allowing member (60A, 60B) has a displacement allowing hole (63B) that allows displacement of the connecting shaft (69) in a vertical direction and allows rotation of the connecting shaft (69) between the seated position and the tilt position, and
wherein the interlocking member (80) has
a displacement allowing portion (85) that allows displacement of the connecting shaft (69) in the vertical direction at the seated position, and
a displacement restricting portion (86) that restricts downward displacement of the connecting shaft (69) at the tilt position.

2. The cab support structure (29B) according to claim 1,
wherein the displacement allowing member (60A, 60B) includes
a plate-shaped vertical plate portion (61B) that has the displacement allowing hole (63B) and extends in the vertical direction, and
a plate-shaped horizontal plate portion (62B) that is coupled to a lower portion of the vertical plate portion (61B), is configured to be connected to the vehicle body frame (11), and extends in the horizontal direction,
wherein the interlocking member (80) is formed in a plate shape extending parallel to the vertical plate portion,
wherein the displacement allowing portion (85) and the displacement restricting portion (86) are continuous along an outer periphery of the interlocking member (80),
wherein, at the seated position, a gap (G) is provided between the displacement allowing portion (85) and an upper surface of the horizontal plate portion (62B) to allow the displacement of the connecting shaft (69) in the vertical direction, and
wherein, at the tilt position, the displacement restricting portion (86) is in contact with the upper surface of the horizontal plate portion (62B).

3. The cab support structure (29B) according to claim 2, wherein, at the seated position, a vertical dimension of the gap (Gt) is larger than a vertical dimension of spacing (St) between an inner surface of the displacement allowing hole (63B) and the connecting shaft (69).

4. The cab support structure (29B) according to claim 2 or 3, wherein the displacement restricting portion (86) has a flat surface along the upper surface of the horizontal plate portion (62B) at the tilt position.

5. The cab support structure (29B) according to any one of claims 2 to 4,
wherein the cab (14) is rotatable to a lift-up position inclined more than the tilt position,
wherein the displacement restricting portion (86) has
a first restricting portion (87) that is in contact with the upper surface of the horizontal plate portion (62B) at the tilt position, and
a second restricting portion (88) that is in contact with the upper surface of the horizontal plate portion (62B) at the lift-up position, and
wherein the second restricting portion (88) has an arc-shaped curved surface that curves outward in a radial direction of the connecting shaft (69) when viewed in an axial direction along the connecting shaft (69).

6. The cab support structure (29B) according to any one of claims 2 to 5, further comprising:
a cover (90) that is provided on the connecting mechanism (39) and covers the gap (G).

7. The cab support structure (29B) according to claim 6, wherein the cover (90) is formed of an elastic material.

8. The cab support structure (29B) according to any one of claims 1 to 7, wherein at least one of the displacement allowing member (60A, 60B) and the interlocking member (80) is formed of a material of a hardened metal.

9. The cab support structure (29B) according to any one of claims 1 to 8,
wherein the displacement allowing member (60A, 60B) is configured to be detachably connected to the vehicle body frame (11),
wherein the interlocking member (80) is configured to be detachably connected to the cab (14), and
wherein only the interlocking member (80) of the displacement allowing member (60A, 60B) and the interlocking member (80) is formed of a material of a hardened metal.

10. The cab support structure (29B) according to any one of claims 1 to 9,
wherein a pair of the displacement allowing members (60A, 60B) are provided,
wherein the pair of displacement allowing members (60A, 60B) are a first displacement allowing member (60A) provided on a first end side of the connecting shaft (69) in an axial direction, and
a second displacement allowing member (60B) provided on a second end side of the connecting shaft (69) in the axial direction.

11. The cab support structure (29B) according to any one of claims 1 to 10, further comprising:
a connecting member (50) configured to be connected to the cab (14),
wherein the connecting member (50) has an insertion hole (54) through which the connecting shaft (69) is inserted, and
wherein the interlocking member (80) is configured to be connected to the cab (14) via the connecting member (50).

12. A construction machine (1) comprising:
a vehicle body frame (11);
a cab (14) provided above the vehicle body frame; and
a cab support structure (29B) according to any one of claims 1 to 11 which is provided between the vehicle body frame (11) and the cab (14).

## Patentansprüche

1. Eine Kabinenstützstruktur (29B) einer Baumaschine (1), umfassend:
eine Befestigungsvorrichtung (30), die an einem Fahrzeugkörperrahmen (11) vorzusehen ist; und
einen Verbindungsmechanismus (39), der so konfiguriert ist, dass er eine Kabine (14), die über dem Fahrzeugkörperrahmen (11) vorgesehen ist, über die Befestigungsvorrichtung (30) mit dem Fahrzeugkarosserierahmen (11) verbindet, so dass sie zwischen einer Sitzposition und einer Neigungsposition drehbar ist,
wobei der Verbindungsmechanismus (39) enthält
eine Verbindungswelle (69), die mit der Befestigungsvorrichtung (30) verbunden ist und sich in einer horizontalen Richtung in einem Zustand erstreckt, in dem die Baumaschine (1) auf einer horizontalen Ebene angeordnet ist,
ein Verschiebungserlaubniselement (60A, 60B), das so konfiguriert ist, dass es mit dem Fahrzeugkörperrahmen (11) verbunden ist,
und
ein Verriegelungselement (80), das so konfiguriert ist, dass es mit der Kabine (14) verbunden wird und in Verriegelung mit der Drehung der Kabine (14) drehbar ist,
**dadurch gekennzeichnet, dass** das Verschiebungserlaubniselement (60A, 60B) ein Verschiebungserlaubnisloch (63B) aufweist, das eine Verschiebung der Verbindungswelle (69) in einer vertikalen Richtung erlaubt und eine Drehung der Verbindungswelle (69) zwischen der Sitzposition und der Neigungsposition ermöglicht, und
wobei das Verriegelungselement (80) einen Verschiebungserlaubnisabschnitt (85), der eine Verschiebung der Verbindungswelle (69) in der vertikalen Richtung in der Sitzposition ermöglicht, und
einen Verschiebungsbeschränkungsabschnitt (86) aufweist, der eine Abwärtsverschiebung der Verbindungswelle (69) in der Neigungsposition beschränkt.

2. Die Kabinenstützstruktur (29B) nach Anspruch 1,
wobei das Verschiebungserlaubniselement (60A, 60B) enthält
einen plattenförmigen vertikalen Plattenabschnitt (61B), der das Verschiebungserlaubnisloch (63B) aufweist und sich in der vertikalen Richtung erstreckt, und
einen plattenförmigen horizontalen Plattenabschnitt (62B), der mit einem unteren Abschnitt des vertikalen Plattenabschnitts (61B) gekoppelt ist, so konfiguriert ist, dass er mit dem Fahrzeugkörperrahmen (11) verbunden ist, und sich in der horizontalen Richtung erstreckt,
wobei das Verriegelungselement (80) in einer Plattenform gebildet ist, die sich parallel zu dem vertikalen Plattenabschnitt erstreckt,
wobei der Verschiebungserlaubnisabschnitt (85) und der Verschiebungsbeschränkungsabschnitt (86) entlang einer Außenperipherie des Verriegelungselements (80) kontinuierlich sind,
wobei in der Sitzposition ein Spalt (G) zwischen dem Verschiebungserlaubnisabschnitt (85) und einer oberen Oberfläche des horizontalen Plattenabschnitts (62B) vorgesehen ist, um die Verschiebung der Verbindungswelle (69) in der vertikalen Richtung zu ermöglichen, und
wobei in der Neigungsposition der Verschiebungsbeschränkungsabschnitt (86) mit der oberen Oberfläche des horizontalen Plattenabschnitts (62B) in Kontakt steht.

3. Die Kabinenstützstruktur (29B) nach Anspruch 2, wobei in der Sitzposition eine vertikale Abmessung des Spaltes (Gt) größer ist als eine vertikale Abmessung des Abstands (St) zwischen einer Innenfläche des Verschiebungserlaubnislochs (63B) und der Verbindungswelle (69).

4. Die Kabinenstützstruktur (29B) nach Anspruch 2 oder 3, wobei der Verschiebungsbeschränkungsabschnitt (86) eine flache Oberfläche entlang der oberen Oberfläche des horizontalen Plattenabschnitts (62B) in der Neigungsposition aufweist.

5. Die Kabinenstützstruktur (29B) nach irgendeinem der Ansprüche 2 bis 4,
wobei die Kabine (14) zu einer Anhebeposition drehbar ist, die mehr als die Neigungsposition geneigt ist,
wobei der Verschiebungsbeschränkungsabschnitt (86) aufweist
einen ersten Beschränkungsabschnitt (87), der in der Neigungsposition mit der oeren Oberfläche des horizontalen Plattenabschnitts (62B) in Kontakt steht, und
einen zweiten Beschränkungsabschnitt (88), der in der Anhebeposition mit der oberen Oberfläche des horizontalen Plattenabschnitts (62B) in Kontakt steht, und
wobei der zweite Beschränkungsabschnitt (88) eine bogenförmig gekrümmte Oberfläche aufweist, die sich in einer axialen Richtung entlang der Verbindungswelle (69) gesehen in einer radialen Richtung der Verbindungswelle (69) nach außen krümmt.

6. Die Kabinenstützstruktur (29B) nach irgendeinem der Ansprüche 2 bis 5, die ferner umfasst:
eine Abdeckung (90), die an dem Verbindungsmechanismus (39) vorgesehen ist und den Spalt (G) abdeckt.

7. Die Kabinenstützstruktur (29B) nach Anspruch 6, wobei die Abdeckung (90) aus
einem elastischen Material gebildet ist.

8. Die Kabinenstützstruktur (29B) nach irgendeinem der Ansprüche 1 bis 7, wobei zumindest eines von dem Verschiebungserlaubniselement (60A, 60B) und dem Verriegelungselement (80) aus einem Material eines gehärteten Metalls gebildet ist.

9. Die Kabinenstützstruktur (29B) nach irgendeinem der Ansprüche 1 bis 8,
wobei das Verschiebungserlaubniselement (60A, 60B) so konfiguriert ist, dass es abnehmbar mit dem Fahrzeugkörperrahmen (11) verbunden ist,
wobei das Verriegelungselement (80) so konfiguriert ist, dass es abnehmbar mit der Kabine (14) verbunden ist, und
wobei nur das Verriegelungselement (80) des Verschiebungserlaubniselements (60A, 60B) und das Verriegelungselement (80) aus einem Material eines gehärteten Metalls gebildet sind.

10. Die Kabinenstützstruktur (29B) nach irgendeinem der Ansprüche 1 bis 9,
wobei ein Paar der Verschiebungserlaubniselemente (60A, 60B) vorgesehen sind,
wobei das Paar der Verschiebungserlaubniselemente (60A, 60B) ein erstes Verschiebungserlaubniselement (60A), das an einer ersten Endseite der Verbindungswelle (69) in einer axialen Richtung vorgesehen ist, und
ein zweites Verschiebungserlaubniselement (60B) ist, das an einer zweiten Endseite der Verbindungswelle (69) in der axialen Richtung vorgesehen ist.

11. Die Kabinenstützstruktur (29B) nach irgendeinem der Ansprüche 1 bis 10, die ferner umfasst:
ein Verbindungselement (50), das so konfiguriert ist, dass es mit der Kabine (14) verbunden wird,
wobei das Verbindungselement (50) ein Einsetzloch (54) aufweist, durch das die Verbindungswelle (69) eingesetzt wird, und
wobei das Verriegelungselement (80) so konfiguriert ist, dass es über das Verbindungselement (50) mit der Kabine (14) verbunden wird.

12. Eine Baumaschine (1), umfassend:
einen Fahrzeugköperrahmen (11);
eine über dem Fahrzeugkörperrahmen vorgesehene Kabine (14); und
eine Kabinenstützstruktur (29B) nach irgendeinem der Ansprüche 1 bis 11, die zwischen dem Fahrzeugkörperrahmen (11) und der Kabine (14) vorgesehen ist.

## Revendications

1. Structure de support de cabine (29B) d'une machine de construction (1) comprenant :
un dispositif de montage (30) à disposer sur un châssis de carrosserie de véhicule (11) ; et
un mécanisme de connexion (39) qui est configuré pour connecter une cabine (14) disposée au-dessus du châssis de carrosserie de véhicule (11) via le dispositif de montage (30) au châssis de carrosserie de véhicule (11) pour qu'elle puisse tourner entre une position assise et une position d'inclinaison,
dans laquelle le mécanisme de connexion (39) comporte
un arbre de connexion (69) qui est connecté au dispositif de montage (30) et s'étend dans une direction horizontale dans un état où la machine de construction (1) est disposée sur un plan horizontal,
un élément permettant un déplacement (60A, 60B) configuré pour être connecté au châssis de carrosserie de véhicule (11), et
un élément d'emboîtement (80) qui est configuré pour être connecté à la cabine (14) et qui peut tourner en emboîtement avec une rotation de la cabine (14),
**caractérisée en ce que**,
l'élément permettant un déplacement (60A, 60B) a un trou permettant un déplacement (63B) qui permet un déplacement de l'arbre de connexion (69) dans une direction verticale et permet une rotation de l'arbre de connexion (69) entre la position assise et la position d'inclinaison, et
dans lequel l'élément d'emboîtement (80) a
une partie permettant un déplacement (85) qui permet un déplacement de l'arbre de liaison (69) dans la direction verticale en position assise, et
une partie restrictive de déplacement (86) qui restreint un déplacement vers le bas de l'arbre de connexion (69) en position d'inclinaison.

2. Structure de support de cabine (29B) selon la revendication 1,
dans laquelle l'élément permettant un déplacement (60A, 60B) comporte
une partie de plaque verticale en forme de plaque (61B) qui a le trou permettant un déplacement (63B) et s'étend dans la direction verticale, et
une partie de plaque horizontale en forme de plaque (62B) qui est couplée à une partie inférieure de la partie de plaque verticale (61B), est configurée pour être connectée au châssis de carrosserie de véhicule (11), et s'étend dans la direction horizontale,
dans laquelle l'élément d'emboîtement (80) est formé en une forme de plaque s'étendant parallèlement à la partie de plaque verticale,
dans laquelle la partie permettant un déplacement (85) et la partie restrictive de déplacement (86) sont continues le long d'une périphérie extérieure de l'élément d'emboîtement (80),
dans laquelle, en position assise, un espace (G) est prévu entre la partie permettant un déplacement (85) et une surface supérieure de la partie de plaque horizontale (62B) pour permettre le déplacement de l'arbre de connexion (69) dans la direction verticale, et
dans laquelle, en position d'inclinaison, la partie restrictive de déplacement (86) est en contact avec la surface supérieure de la partie de plaque horizontale (62B).

3. Structure de support de cabine (29B) selon la revendication 2, dans laquelle, en position assise, une dimension verticale de l'espace (Gt) est supérieure à une dimension verticale d'espacement (St) entre une surface intérieure du trou permettant un déplacement (63B) et l'arbre de connexion (69).

4. Structure de support de cabine (29B) selon la revendication 2 ou 3, dans laquelle la partie restrictive de déplacement (86) présente une surface plate le long de la surface supérieure de la partie de plaque horizontale (62B) en position d'inclinaison.

5. Structure de support de cabine (29B) selon l'une quelconque des revendications 2 à 4,
dans laquelle la cabine (14) peut tourner jusqu'à une position de levage inclinée davantage que la position d'inclinaison,
dans laquelle la partie restrictive de déplacement (86) a
une première partie restrictive (87) qui est en contact avec la surface supérieure de la partie de plaque horizontale (62B) en position d'inclinaison, et
une seconde partie restrictive (88) qui est en contact avec la surface supérieure de la partie de plaque horizontale (62B) en position de levage, et
dans laquelle la seconde partie restrictive (88) a une surface incurvée en forme d'arc qui s'incurve vers l'extérieur dans une direction radiale de l'arbre de connexion (69) lorsqu'elle est observée dans une direction axiale le long de l'arbre de connexion (69).

6. Structure de support de cabine (29B) selon l'une quelconque des revendications 2 à 5, comprenant en outre :
un couvercle (90) qui est disposé sur le mécanisme de connexion (39) et qui couvre l'espace (G).

7. Structure de support de cabine (29B) selon la revendication 6, dans laquelle le couvercle (90) est formé d'un matériau élastique.

8. Structure de support de cabine (29B) selon l'une quelconque des revendications 1 à 7, dans laquelle au moins l'un de l'élément permettant un déplacement (60A, 60B) et de l'élément d'emboîtement (80) est formé d'un matériau constitué d'un métal endurci.

9. Structure de support de cabine (29B) selon l'une quelconque des revendications 1 à 8,
dans lequel l'élément permettant un déplacement (60A, 60B) est configuré pour être connecté de manière amovible au châssis de carrosserie de véhicule (11),
dans lequel l'élément d'emboîtement (80) est configuré pour être connecté de manière amovible à la cabine (14), et
dans lequel seul l'élément d'emboîtement (80) de l'élément permettant un déplacement (60A, 60B) et de l'élément d'emboîtement (80) est formé d'un matériau d'un métal endurci.

10. Structure de support de cabine (29B) selon l'une quelconque des revendications 1 à 9,
dans laquelle une paire des éléments permettant un déplacement (60A, 60B) est prévue,
dans laquelle la paire d'éléments permettant un déplacement (60A, 60B) est
un premier élément permettant un déplacement (60A) disposé sur un premier côté d'extrémité de l'arbre de connexion (69) dans une direction axiale, et
un second élément permettant un déplacement (60B) disposé sur un second côté d'extrémité de l'arbre de connexion (69) dans la direction axiale.

11. Structure de support de cabine (29B) selon l'une quelconque des revendications 1 à 10, comprenant en outre :
un élément de connexion (50) configuré pour être connecté à la cabine (14),
dans laquelle l'élément de connexion (50) a un trou d'insertion (54) à travers lequel l'arbre de connexion (69) est inséré, et
dans laquelle l'élément d'emboîtement (80) est configuré pour être connecté à la cabine (14) via l'élément de connexion (50).

12. Machine de construction (1) comprenant :
un châssis de carrosserie de véhicule (11) ;
une cabine (14) disposée au-dessus du châssis de carrosserie de véhicule ; et
une structure de support de cabine (29B) selon l'un quelconque des revendications 1 à 11, qui est disposée entre le châssis de carrosserie de véhicule (11) et la cabine (14).
